(19) Europäisches Patentamt
European Patent Office
Office européen des brevets

(11) **EP 1 837 314 B1**

(12) **EUROPÄISCHE PATENTSCHRIFT**

(45) Veröffentlichungstag und Bekanntmachung des Hinweises auf die Patenterteilung:
**12.08.2009 Patentblatt 2009/33**

(51) Int Cl.:
*C03C 10/12* *(2006.01)*      *C03C 3/095* *(2006.01)*
*C03C 3/083* *(2006.01)*

(21) Anmeldenummer: **06005598.5**

(22) Anmeldetag: **20.03.2006**

(54) **Transparente, farblose Lithium-Aluminosilikat-Glaskeramikplatte mit blickdichter, farbiger Unterseitenbeschichtung**

Plate of transparent, colourless lithium aluminium slicate glass ceramic with opaque, coloured underside coating

Plaque de vitrocéramique de lithium aluminium silicate transparente et incolore avec sous-revêtement opaque et coloré

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**26.09.2007 Patentblatt 2007/39**

(73) Patentinhaber: **Schott AG**
**55122 Mainz (DE)**

(72) Erfinder:
• **Siebers, Friedrich, Dr.**
**55283 Nierstein (DE)**
• **Schiffner, Ulrich, Dr.**
**55126 Mainz (DE)**

• **Schmidbauer, Wolfgang, Dr.**
**55126 Mainz-Finthen (DE)**
• **Schönberger, Klaus, Dr.**
**55126 Mainz (DE)**
• **Grewer, Petra**
**65203 Wiesbaden (DE)**
• **Rodek, Erich, Dr.**
**55126 Mainz (DE)**

(74) Vertreter: **Fuchs Patentanwälte**
**Postfach 46 60**
**65036 Wiesbaden (DE)**

(56) Entgegenhaltungen:
WO-A-01/72087          DE-A1- 10 017 701
US-A- 4 018 612        US-A- 4 093 468

**Beschreibung**

Die Erfindung bezieht sich auf eine transparente Glaskeramikplatte mit Hochquarz-Mischkristallen als vorherrschende Kristallphase, die betrieblich hohen thermischen Belastungen ausgesetzt ist und die ganzflächig oder partiell eine blickdichte farbige, hochtemperaturstabile Unterseitenbeschichtung aufweist.

Unter einer Glaskeramikplatte im Sinne der Erfindung sollen nicht nur flache ebene Platten, sondern auch dreidimensional verformte wie z.B. abgekantete, abgewinkelte oder gewölbte Platten verstanden werden. Dabei können die Platten rechtwinklig oder rund ausgebildet sein bzw. können auch eine andere Kontur haben. Solche Glaskeramikplatten verfügen über einen sehr niedrigen thermischen Ausdehnungskoeffizienten im Temperaturbereich zwischen Raumtemperatur bis 700°C von üblicherweise $\alpha_{20/700}$< $1{,}5 \cdot 10^{-6}$/K und damit über hohe Temperaturbelastbarkeit und Temperaturgradientenfestigkeit. Sie finden in transparenter Form Anwendung z.B. als Brandschutzglas, Kaminsichtscheiben und Kochflächen.

Kochfelder mit einer Glaskeramikplatte als Kochfläche sind gängiger

Stand der Technik.

Um die störende Durchsicht auf die technischen Bauelemente unter der Glaskeramik-Kochfläche zu verhindern und um die Blendwirkung durch strahlende Heizkörper zu vermeiden, sind die Glaskeramik-Kochflächen in ihrer Lichttransmission auf Werte von ca. 0,5 bis 10% verringert. Dies kann zum einen durch Zusätze von färbenden Elementen durch Absorption geschehen, wie dies zum Beispiel in der EP 220333 beschrieben ist. Diese Glaskeramik-Kochflächen erscheinen dann in Aufsicht schwarz und je nach verwendeten farbgebenden Elementen in Durchsicht rotviolett oder organgebraun.

Bei Glaskeramik-Kochflächen mit Keatitkristallen als vorherrschende Kristallphase kann die geforderte Lichttransmission über Lichtstreuung an den vergrößerten Kristalliten eingestellt werden, wie dies in der EP 1 170 264 beschrieben ist. Ein grundsätzlicher Nachteil dieser beiden Glaskeramik-Kochflächentypen besteht in ihrer eingeschränkten Display-Fähigkeit. Die Einfärbung der Glaskeramik Kochfläche über absorbierende Elemente führt dazu, dass Anzeigen nur mit bestimmten Farben, meist mit roter Farbe, möglich sind. Die Erniedrigung der Lichttransmission durch Lichtstreuung führt dazu, dass die Anzeigen nicht mehr scharf erscheinen und störende Lichthöfe entstehen.

Ein weiterer Verwendungszweck für Glaskeramikscheiben besteht in der Verwendung z.B. als Kaminsichtscheiben. Für diesen Zweck müssen die Scheiben durchsichtig sein. Fabrikationstechnisch ist es günstig, wenn für diese beiden Verwendungszwecke Scheiben derselben Zusammensetzung benutzt werden könnten.

Ein vergleichsweise neuer technischer Ansatz für die Herstellung von Kochflächen besteht darin, transparente Glaskeramikplatten durch eine blickdichte gefärbte Unterseitenbeschichtung optisch nicht transparent zu machen. Die Unterseitenbeschichtung ist gegebenenfalls partiell unterbrochen, um optisch transparente Bereiche für Display-Anzeigen, z.B. LED- oder LCD-Anzeigen von Restwärme in den Kochzonen bereitzustellen. Auch farbige oder schwarz-weiß Bildschirm-Displays, z.B. zum Anzeigen von Kochrezepten oder für interaktive Funktionen (Internet, Vernetzung mit anderen Hausgeräten, Steuerelektronik), können unter die optisch transparenten Bereiche integriert werden.

Transparente nicht eingefärbte Kochfelder, die mit einer Unterseitenbeschichtung versehen sind, sind z.B. aus US 6,914,223 B2, US 2005/0129959 A1 oder US 6,660,989 B2 bekannt. Die Art und Ausbildung der Untereitenbeschichtung kann in den kälteren und heißeren Bereichen, z.B. in den Kochzonen von Kochflächen unterschiedlich ausgebildet sein. Eine Glaskeramik für diesen Zweck wird auch in DE 100 17 701 A1 beschrieben, deren Grundglaszusammensetzungen erhebliche Überlappungen mit der später beschriebenen anmeldungsgemäßen Grundglaszusammensetzung aufweist. Diese Schrift gibt jedoch keine Anhaltspunkte für die Zusammensetzung einer farbneutralen, unbunten Glaskeramik.

Als spezifikationsgerechte Farben für diese UnterseitenBeschichtungen werden insbesondere Lüsterfarben, Farben auf organischer Basis, Dekorfarben auf Glasflussbasis mit farbgebenden Pigmenten und gefärbte oder pigmentierte Sol Gel-Schichten genannt. Als Pigmente kommen konventionelle anorganische Pigmente, Lüster-, Metalleffekt-, oder Perlglanzinterferenz-Pigmente und verschiedene Mischungen dieser Pigmente zum Einsatz.

Damit die Farbe der Unterseitenbeschichtung nicht durch die transparente Glaskeramikplatte verändert wird, ist es vorteilhaft, wenn diese über eine geringe Eigenfarbe verfügt. Da das bestrahlende Licht die Glaskeramikplatte durchläuft, ehe es auf die farbige Beschichtung fällt, um an dieser teilweise absorbiert und reflektiert zu werden, bevor es dann wieder durch die Glaskeramikplatte zurückläuft und zum Betrachter gelangt, macht sich auch eine schwache Eigenfarbe der transparenten Glaskeramikplatte störend bemerkbar. Die Vorteile einer transparenten Glaskeramikplatte mit geringer Eigenfarbe werden im Stand der Technik erkannt.

So beschreibt z.B. die US 6,660,980 B2 die Verwendung einer transparenten Glaskeramik als Substrat für die Unterseitenbeschichtung. Die übliche geringfügige bräunlich gelbe Eigenfärbung dieser und anderer verwendeter Glaskeramikplatten wurde bisher notgedrungen akzeptiert.

Die US 6,914,223 B2 beschreibt in Spalte 6, Absatz 3 wie sich durch Überlagerung der Farbe der Unterseitenbeschichtung mit der bräunlich gelben Eigenfärbung der Glaskeramikplatte ein neuer Farbton einstellt. Nachteilig ist, dass die erkennbare Eigenfarbe der transparenten Glaskeramikplatte abhängig ist von ihrer Dicke. Des weiteren lassen sich bestimmte reine Farbtöne, so z.B. weiß oder silbermetallic für den Betrachter nicht ohne störenden braungelben Farbstich realisieren. Bei Entwicklung einer Farbpalette von verschieden farbigen Unterseitenbeschichtungen ist es notwendig, immer die Eigenfarbe der transparenten Glaskeramikplatten zu berücksichtigen. Diese Eigenfarbe ist aber für den Betrachter, wie ausgeführt, abhängig von der Dicke der Glaskeramikplatter und kann auch durch prozessbedingte Schwankungen (Rohstoffverunreinigung, Schmelzbedingungen, Keramisierung) variieren. Aus den genannten Gründen ist es daher anzustreben die Eigenfarbe bei der transparenten Glaskeramikplatte möglichst gering einzustellen.

Die Eigenfarbe transparenter Glaskeramikplatten kann verschiedene Ursachen haben. Auch die Verwendung des Läutermittels $Sb_2O_3$ führt zu einer geringen Eigenfarbe. Die beschriebene bräunlich gelbe Eigenfärbung der transparenten Glaskeramiken beruht auf elektronischen Übergängen an Farbkomplexen, die im Bereich des sichtbaren Lichtes absorbieren und an denen die für die Keimbildung notwendige Komponente, das Ti-Ion beteiligt ist. Der häufigste absorbierende Farbkomplex ist die Ausbildung von benachbarten Fe- und Ti-Ionen, zwischen denen elektronische Charge-Transfer- Übergänge stattfinden. Die Ausbildung dieser benachbarten Komplexe findet bereits beim Abkühlen des Ausgangsglases und insbesondere beim späteren Keramisieren der Glaskeramiken statt. Durch bevorzugte Auseinanderlagerung der am Charge-Transfer beteiligten Ionen beim Keramisieren verstärkt sich dadurch die Eigenfarbe gegenüber dem Ausgangsglas ganz beträchtlich.

Bei der Herstellung von Glaskeramikplatten mit Zusatz von $SnO_2$ als Keimbildner bzw. Läutermittel hat sich gezeigt, dass beim Keramisieren ein zusätzlicher störender Farbkomplex auftritt. Dieser Farbkomplex beruht auf Sn/Ti-Farbkomplexen, die ebenfalls im kurz- bis mittelwelligen Teil des sichtbaren Spektrums absorbieren. In den Ausgangsgläsern ist dieser Farbkomplex wenig ausgebildet, nach dem Keramisieren führt er in der transparenten Glaskeramik zu einer sehr störenden gelbbraunen Färbung.

Für transparente Glaskeramiken ohne farbige Beschichtung sind verschiedene Ansätze bekannt, um die störende, auf dem Fe/Ti-Farbkomplex beruhende Eigenfarbe zu verringern. Ein Ansatz ist die Verringerung des als Verunreinigung vorliegenden Eisen-Gehalts.

Die Verringerung des Fe-Gehaltes ist jedoch nur bis zu einem bestimmten Grad eine wirtschaftlich umsetzbare Maßnahme. Durch die großtechnisch verfügbaren Gemengerohstoffe für die Herstellung und Homogenisierung des Gemenges entsteht immer ein gewisser Eintrag von $Fe_2O_3$. Aufgrund der Kosten für hochreine Rohstoffe und für konstruktive anlagentechnische Sondermaßnahmen ist bei transparenten Glaskeramiken ein $Fe_2O_3$-Gehalt unter ca. 50 ppm wirtschaftlich nicht mehr vertretbar. Üblicherweise liegt der $Fe_2O_3$-Gehalt in der Größenordnung von ca. 150 bis 500 ppm.

Ansätze zur Verringerung des Fe/Ti-Farbkomplexes beschreibt die US 4,438,210. Hier werden transparente Glaskeramiken mit geringer Eigenfarbe erhalten, die 2-6 Gew.-% $TiO_2$ und 0-2 Gew. $ZrO_2$ als Keimbildner und bis etwa 0,1 Gew.-% $Fe_2O_3$ als Verunreinigung dadurch erhalten, dass die Komponente MgO im wesentlichen weggelassen wird.

Der Ersatz des Keimbildners $TiO_2$ wird in der JP 03-23237 A beschrieben. Diese Glaskeramiken verzichten auf den Zusatz von $TiO_2$ als Keimbildner und basieren auf einer Mischkeimbildung durch $ZrO_2/SnO_2$. Die dazu notwendigen $SnO_2$-Gehalte betragen mehr als 1 Gew.-%. Bei diesen hohen $SnO_2$-Gehalten verschlechtert sich jedoch die Entglasungsfestigkeit des Glases im Bereich derformgebung bei Viskositäten um die Verarbeitungstemperatur $V_A$ von $10^4$ dPas. Bei der Formgebung, die bei Glaskeramikplatten üblicherweise über eine Oberund Unterwalze erfolgt, kristallisieren störende Sn- und/oder Zr-haltige Kristallphasen aus. Dadurch kommt es zu einer unzulässigen Verringerung der Festigkeit der Glasplatten und der daraus hergestellten Glaskeramikplatten.

Um eine störende Lichtstreuung (Trübung) der transparenten Glaskeramikplatte zu vermeiden sind jedoch bestimmte Mindestgehalte der Keimbildner $ZrO_2$, $TiO_2$ und gegebenenfalls $SnO_2$ erforderlich. Damit wird sichergestellt, dass sich auch bei den produktionstechnisch erwünschten kurzen Keramisierungszeiten ausreichend Keime bilden und die aufwachsenden Hochquarz-Mischkristalle klein genug bleiben, um nicht zu einer störenden Lichtstreuung zu führen. Die Lichtstreuung kann visuell an Glaskeramikplatten oder quantitativ durch Messung der Trübung (engl. haze) nach ASTM D 1003 bestimmt werfen. Da die Gehalte der Keimbildner $ZrO_2$ und $SnO_2$ wegen der Entglasung bei der Formgebung begrenzt sind, ist beim gegenwärtigen Stand der Technik ein Mindestgehalt des Keimbildners $TiO_2$ erforderlich, um die Entglasungsfestigkeit bei der Formgebung von Glasplatten sicherzustellen.

Aus der Glastechnologie ist es auch bekannt, einen unerwünschten Farbstich, der durch eine Verunreinigung des Gases mit einem färbenden Element hervorgerufen wird, durch den Zusatz eines färbenden Elements mit einer komplementären Farbe zu neutralisieren. Seit alters her bekannt ist der Zusatz von $MnO_2$ ("Glasmacherseife") zur Aufhebung schwacher durch Eisen verursachter Färbungen. Auch die Neutralisierung der bemsteinfarbigen durch Titan und Eisen hervorgerufenen Färbung durch Neodymoxid ist aus der US 4,093,468 bekannt. Durch die Neutralisation (Überfärbung) des störenden Farbstichs erreicht man, dass die störende Eigenfarbe in Richtung eines neutralen Farbtons verändert wird. Neutrale Farbtöne also z.B. schwache Grautöne sind visuell weniger auffällig und störend. Die Farbe der Beschichtung bei Durchsicht durch die transparente Glaskeramikplatte wird farblich nicht verändert, sondern durch einen leichten Graustich kaum merkbar überlagert. Da die vorhandenen Absorptionsbanden durch komplementäre Absorptionsbanden des Überfärbemittels neutralisiert werden, ergibt sich insgesamt eine erniedrigte Lichttransmission.

Da aus den bekannten Gründen der Einsatz von Arsenik als Läutermittel immer weniger toleriert wird, wird in zunehmendem Maße mit anderen Läutermitteln, insbesondere Antimonoxid und Zinnoxid, aber auch Cerdioxid geläutert. Diese Läutermittel bzw. Glaszusätze fügen der Glaskeramik weitere Farbstiche zu, die ebenfalls neutralisiert werden müssen. Dabei darf es jedoch nicht so weit kommen, dass die Transmission der Glaskeramik so stark beeinträchtigt wird, dass die erzeugte Neutralfärbung sich in einer Graufärbung bemerkbar macht.

Ein weiteres Problem entsteht bei dem Recyclen der Glaskeramik. Bekanntlich wird Altglas, z.B. Behälterglas, wie Flaschen, Glasbehälter, aber auch Flachglas, wie Fensterglas, in großem Umfang gesammelt und in Form von Scherben der Wiederverwertung zugeführt. Gelangt unter diese Scherben auch Glaskeramik, so führt das zu Problemen in den Schmelzwannen und im Formgebungsprozess, weil die Glaskeramiken aus dem $Li_2O$-$Al_2O_3$-$SiO_2$-Glassystem über höhere Schmelztemperaturen verfügen und sich dadurch beim Wiederaufschmelzen der Kalk-Natron-Gläser und deren Formgebung sehr störend bemerkbar machen können. Die Gefahr besteht darin, dass das hochschmelzende $Li_2O$-$Al_2O_3$-$SiO_2$-Glas nicht aufgeschmolzene Relikte in den Kalk-Natron-Gläsern bildet. Dies führt im günstigsten Fall zu visuell erkennbaren Relikten in den Kalk-Natron-Glasprodukten, Im ungünstigsten Fall kann es zu $Li_2O$-$Al_2O_3$-$SiO_2$-Schmelzrelikten und zum Verstopfen von Kanälen oder Düsen Im Formgebungsprozess und damit zum Totalausfall bei der Produktion der Kalk-Natron-Gläser führen.

Bereits heute werden die Scherben vor ihrer Wiederverwendung häufig schon durch optische Erkennungsmethoden nach Sorten, z.B. Braunglas, Grünglas, farbloses Glas, getrennt. Diese optischen Erkennungsmethoden trennen die Scherben aufgrund ihrer unterschiedlichen Absorptionsbanden. Es wäre wünschenswert, wenn die Glaskeramik-Scherben bei diesem Trennvorgang ebenfalls erkannt und abgetrennt werden könnten, einmal, um die Gebrauchsglaswannen zu schonen und zum anderen um auch die Glaskeramik-Scherben der Wiederverwertung zuführen zu können.

Es besteht daher die Aufgabe, eine rückseitig ganzflächig oder partiell beschichtete Glaskeramik-Scherbe zu finden, die keinen die Farbe der Rückseitenbeschichtung verfälschenden störenden Farbton aufweist und die in Scherbensortieranlagen mit optischer Scherbenerkennung eindeutig identifizierbar ist.

Diese Aufgabe wird durch die in Patentanspruch 1 beschriebene Glaskeramikplatte gelöst. Weitere Ausgestaltungen der Erfindung sind in den Unteransprüchen beschrieben.

Es konnte eine rückseitenbeschichtete Glaskeramikplatte im Lithium-Alumino-Silikat-System mit Hochquarz-Mischkristallen als vorherrschender Kristallphase gefunden werden, die einen $Nd_2O_3$-Gehalt von 0,01 - 0,4 Gew.-%, einen Yellowness-Index von kleiner 10% bei 4mm Plattenstärke und einer Buntheit der Glaskeramik im CIELAB-Farbsystem von C* kleiner 5 besitzt.

Die Messung des Yellow-Indes geschieht bei Normlicht C gemäß der Norm ASTM 1925/70 (77, 85). Die Buntheit (Chromatizität) C* im CIELAB-System ist definiert durch $C* = \sqrt{a*^2 + b*^2}$ , wobei a* und b* die Farbkoordinaten in diesem System sind. Die Farbkoordinaten L*, a*, b* aus dem CIELAB-System (oder kurz Lab-System lassen sich in bekannter Weise in Farbkoordinaten x y und Helligkeit (Lichttransmission) Y des CIE-Farbsystems umrechnen.

Es konnte gefunden werfen, das der Neodymzusatz besonders gut den durch $Sb_2O_3$-Läuterzussätze und durch SnTi-Farbkomplexe gebildeten Farbstichen entgegenwirkt, neben den durch Fe/Ti-Farbkomplexen gebildeten Farbstichen.

Zusätze von Co in einer Gesamtmenge 0,0 bis 0,004 Gew.-%, insbesondere 0,00001 - 0,004 Gew.-% zusätzlich zum Nd-Zusatz erlauben es, den Farbpunkt der transparenten Farbkeramikplatte noch genauer in Richtung Unbuntpunkt einzustellen. Der Nd-Zusatz allein verschiebt den Farbpunkt nicht exakt in Richtung Unbuntpunkt, so dass diese leichte Korrektur vorteilhaft sein kann. Weitere Feinkorrekturen des Farbortes können noch über weitere Färbemittel, wie z.B. Cr, Ni, V, Cu, Mn, Ce vorgenommen werden.

Die erfindungsgemäße transparente Glaskeramikplattebesitzt eine Zusammensetzung in Gew.-% auf Oxidbasis von:

| | |
|---|---|
| $Li_2O$ | 3,0-4,5 |
| $Na_2O$ | 0-1,5 |
| $K_2O$ | 0-1,5 |
| $\Sigma Na_2O+K_2O$ | 0,2-2,0 |
| MgO | 0-2,0 |
| CaO | 0-1,5 |
| SrO | 0-1,5 |
| BaO | 0-2,5 |
| ZnO | 0-2,5 |
| $B_2O_3$ | 0-1,0 |

(fortgesetzt)

| | |
|---|---|
| $Al_2O_3$ | 19-25 |
| $SiO_2$ | 55-69 |
| $TiO_2$ | 1-3 |
| $ZrO_2$ | 1-2,5 |
| $SnO_2$ | 0-0,4 |
| $\Sigma SnO_2+TiO_2$ | < 3 |
| $P_2O_5$ | 0-3,0 |
| $Nd_2O_3$ | 0,01-0,4 |
| CoO | 0-0,004 |

gegebenenfalls mit Zusätzen chemischer Läutermittel wie $As_2O_3$, $Sb_2O_3$, $CeO_2$ und Läuterzusätzen wie Sulfat-, Chlorid-, Fluoridverbindungen in Gesamtgehalten bis zu 2,0 Gew.-%.

Die Oxide $Li_2O$, $Al_2O_3$ und $SiO_2$ sind in den bevorzugten, in den Ansprüchen angegebenen Grenzen, notwendige Komponenten für die Bildung der Hochquarz und/oder Keatit-Mischkristallphasen. $Li_2O$-Gehalte von über 4,5 Gew.-% sind kritisch für die Entglasungsfestigkeit bei der Herstellung der Glaskeramikplatten. Der $Al_2O_3$-Gehalt beträgt mindestens 19 Gew.-% und ist zur Vermeidung hoher Viskositäten des Glases und wegen der unerwünschten Entglasung von Mullitphasen bei der Formgebung auf maximal 25 Gew.-%, bevorzugt 24 Gew.-% begrenzt. Der $SiO_2$-Gehalt soll 55 bis maximal 69 Gew.-%, bevorzugt maximal bis 68 Gew.-% betragen, weil diese Komponente die Viskosität des Glases stark erhöht. Für das Schmelzen der Gläser und hinsichtlich der Temperaturbelastung bei der Formgebung sind daher höhere Gehalte von $SiO_2$ unvorteilhaft.

Die Zugabe der Alkalien $Na_2O$, $K_2O$ in Mengen von jeweils bis zu 1,5 Gew.-%, der Erdalkalien CaO bis zu 1,5 Gew.-%, SrO bis zu 1,5 Gew.-%, BaO bis zu 2,5 Gew.-% sowie von $B_2O_3$ bis zu 1 Gew.-% verbessern die Schmelzbarkeit und das Entglasungsverhalten bei der Formgebung. Die Gehalte sind jedoch begrenzt, weil diese Komponenten im wesentlichen in der Restglasphase der Glaskeramik verbleiben und die thermische Ausdehnung in unzuverlässiger Weise erhöhen. Damit wirken sie sich ungünstig auf die Temperaturbelastbarkeit der Glaskeramikplatten aus. Die Summe der Alkalien $Na_2O+KO_2$ soll mindestens 0,2 Gew.-%, bevorzugt mindestens 0,3 Gew.-% betragen.

Als weitere Komponenten können MgO, ZnO und $P_2O_5$ in die Kristallphase eingebaut werden. Der ZnO-Gehalt ist wegen der Problematik der Bildung unerwünschter Kristallphasen mit höherer thermischer Ausdehnung, wie z.B. Zn-Spinell bei der Keramisierung auf Werte von höchstens 2,5 Gew.-%, bevorzugt höchstens 2,0 Gew.-% begrenzt. Der MgO-Gehalt ist auf maximal 2,0 bevorzugt, 1,5 Gew.-% begrenzt, weil er die thermische Ausdehnung der Glaskeramik sonst unzuverlässigerweise erhöht. Für geringe Eigenfarbe sind MgO-Gehalte weniger als 0,8 Gew.-% und insbesondere weniger als 0,6 Gew.-% vorteilhaft. Ein MgO-Mindestgehalt von 0,1 Gew.-% wird in der Regel benötigt, damit die thermische Ausdehnung der Glaskeramik zwischen 20°C und 700°C nicht auf negative Werte unter -0,3 x $10^{-6}$/K fällt. Die Zugabe von $P_2O_5$ kann bis zu 3 Gew.-% betragen und ist bevorzugt auf 1,5 Gew.-% begrenzt. Die Zugabe von $P_2O_5$ ist günstig für die Entglasungsfestigkeit, höhere Gehalte wirken sich ungünstig auf die Säurebeständigkeit aus.

Der Nd-Gehalt ist in den Angaben umgerechnet auf Oxidbasis ($Nd_2O_3$), wobei die Art des Nd-Zusatzes im Gemenge nicht auf das angegebene Oxid beschränkt ist, sondern beliebige Nd-Verbindungen zugesetzt werden können.

Die Gehalte der keimbildenden Komponenten $TiO_2$, $ZrO_2$, $SnO_2$ sind in relativ engen Grenzen zu kontrollieren. Es sind bestimmte Mindestgehalte erforderlich, um bei den angestrebten kurzen Keramisierungszeiten von weniger als 2,5h während der Keimbildung eine hohe Dichte zu erzeugen, damit nach dem Aufwachsen der Hochquarz-Mischkristalle transparente Glaskeramiken ohne störende Trübung realisierbar sind.

Für eine effektive Keimbildung ist in jedem Fall ein Mindestgehalt $TiO_2$ von 1 Gew.-% erforderlich. Der $TiO_2$-Gehalt soll maximal 3 Gew.-%., bevorzugt höchstens 2,7 Gew.-% betragen, weil diese Komponente an der Bildung für die Eigenfarbe störende Fe/Ti- und Sn/Ti-Farbkomplexe beteiligt ist.

Der Gehalt an $SnO_2$ soll 0,4 Gew.-%, bevorzugt 0,3 Gew.-% nicht übersteigen, weil es sonst bei der Formgebung in der Nähe der Verarbeitungstemperatur $V_A$ zu einer unerwünschten Entglasung einer Sn-haltigen Kristallphase kommt und weil die Sn/Ti-Farbkomplexe zur Eigenfarbe beitragen.

Entsprechendes gilt für den Gehalt an $ZrO_2$ bei dem eine Obergrenze von 2,5 Gew.-% eingehalten werden soll, damit es nicht zur Entglasung einer $ZrO_2$-haltigen Kristallphase (Baddeleyit) kommt. Es ist anzustreben, dass die obere Entglasungsgrenze (OEG) unterhalb der Verarbeitungstemperatur $V_A$ liegt.

Als chemische Läutermittel können die für Glaskeramiken aus dem $Li_2O$-$Al_2O_3$-$SiO_2$-System üblichen Läutermittel $As_2O_3$, und/oder $Sb_2O_3$ eingesetzt werden. Diese Läutermittel zeichnen sich dadurch aus, dass sie ihre Läuterwirkung durch Freisetzen von $O_2$ entfalten. Der Einsatz des Keimbildners $SnO_2$ ist besonders dann vorteilhaft, wenn dies zusätzlich als Läutermittel in Verbindung mit einer Hochtemperaturläuterung größer als 1700°C eingesetzt wird, weil $SnO_2$ den zur Läuterung benötigten $O_2$ bei diesen höheren Temperaturen abspaltet. Weitere Läutermittelzusätze wie z.B. Sulfat-, Chlorid-, Fluoridverbindungen können der Glasschmelze zugesetzt werden. Der Gesamtgehalt der Läutermittel und Läuterzusätze soll 2 Gew.-% nicht übersteigen.

Der Wassergehalt der erfindungsgemäßen Ausgangsgläser beträgt, abhängig von der Wahl der Gemengerohstoffe und den Prozessbedingungen bei der Schmelze üblicherweise zwischen 0,015 und 0,06 mol/l. Dies entspricht $\beta_{OH}$-Werten von 0,16 bis 0,64 mm$^{-1}$.

Gemäß einer Weiterbildung der Erfindung enthält das Glas in einer besonders bevorzugten Ausführungsform in Gew.-% auf Oxidbasis:

| | |
|---|---|
| $Li_2O$ | 3,2-4,3 |
| $Na_2O$ | 0,2-1,0 |
| $K_2O$ | 0-0,8 |
| $\Sigma Na_2O+K_2O$ | 0,3-1,5 |
| $MgO$ | 0,1-1,5 |
| $CaO$ | 0-1,0 |
| $SrO$ | 0-1,0 |
| $BaO$ | 0-2,5 |
| $ZnO$ | 0-2,0 |
| $Al_2O_3$ | 19-24 |
| $SiO_2$ | 60-68 |
| $TiO_2$ | 1,0-2,7 |
| $ZrO_2$ | 1,2-2,2 |
| $SnO_2$ | 0-0,3 |
| $\Sigma SnO_2+TiO_2$ | < 2,7 |
| $P_2O_5$ | 0-1,5 |
| $Nd_2O_3$ | 0,02 - 0,3 |
| $CoO$ | 0-0,003 |

gegebenenfalls mit Zusätzen chemischer Läutermittel wie $As_2O_3$, $Sb_2O_3$, $CeO_2$ und Läuterzusätzen wie Sulfat-, Chlorid-, Fluoridverbindungen in Gesamtgehalten bis zu 1,5 Gew.-%.

Bei niedrigen Läutermittelgehalten kann es erforderlich sein, die chemische Läuterung mit einer Hochtemperaturläuterung oberhalb 1700°C zu kombinieren, falls gute Blasenqualitäten mit Blasenzahlen < 5 Blasen/kg Glas (bezogen auf Blasengrößen > 0,1 mm) gewünscht sind.

Für die Eigenfarbe ist es besonders günstig, wenn die Glaskeramikplatte als Läutermittel $As_2O_3$ ggf. mit weiteren Läuterzusätzen wie Sulfat-, Chlorid-, Fluorverbindungen in Gesamtgehalten bis zu 1 Gew.-% enthält und ohne die Läutermittel $Sb_2O_3$ und $SnO_2$ geläutert ist.

Durch die Verwendung von 0,1-0,4 Gew.-% $SnO_2$ als Läutermittel in Kombination mit einer Hochtemperaturläuterung > 1700°C ist es möglich, entglasungsstabile Ausgangsgläser (OEG <$V_A$) mit guten Blasenqualitäten zu erhalten.

Die erfindungsgemäße transparente beschichtete Glaskeramikplatte mit Hochquarz-Mischkristallen als vorherrschende Kristallphase soll einen thermischen Ausdehnungskoeffizienten zwischen Raumtemperatur und 700°C besitzen, der nicht mehr als 0,5·10$^{-6}$/K von der Nullausdehnung abweicht. Bevorzugt soll die Abweichung weniger als 0,3·10$^{-6}$/K betragen. Mit den niedrigen thermischen Ausdehnungskoeffizienten wird eine hohe Temperaturunterschiedsfestigkeit der Glaskeramikplatte erreicht.

Zum Erreichen besonders guter Eigenschaften hinsichtlich geringer Eigenfarbe und hoher Lichttransmission ist es von Vorteil, wenn die erfindungsgemäße transparente Glaskeramikplatte weniger als 2,5 Gew.-% $TiO_2$, weniger als 0,2 Gew.-% $Nd_2O_3$ und weniger als 0,002 Gew.-% $CoO$ enthält und der $Fe_2O_3$-Gehalt weniger als 0,03 Gew.-%, bevorzugt weniger als 0,0210 Gew.-% beträgt. Damit ist es möglich, bei 4 mm Dicke eine Lichttransmission von größer 80%, bevorzugt größer 85% zu erreichen, verbunden mit geringer Eigenfarbe, d.h. einem Yellowness-Index von kleiner 7% und einer Buntheit (Chromatiziät) im CIELAB-System C* kleiner 3,5.

Um störende Lichtstreuung (Trübung) der transparenten Glaskeramikplatten bei der Herstellung mit kurzen Keramisierungszeiten zu vermeiden, sind bestimmte Mindestgehalte der Keimbildner erforderlich. Die Trübung (engl.: haze) soll weniger als 1 %, bevorzugt weniger als 0,5% betragen (gemessen für eine 3,6mm dicke Platte mit polierter Oberfläche). Trübung ist nach ASTM D 1003 der prozentuale Anteil durchgelassenen Lichts, der vom eingestrahlten Lichtbündel im Mittel um mehr als 2,5° abweicht.

Die Untersuchungen haben gezeigt, dass die Keimbildungswirkung von $SnO_2$ und $TiO_2$ (in Gew.-%) in etwa gleich ist. Deshalb können diese beiden Komponenten zusammen betrachtet werden. Die Keimbildungswirkung des $ZrO_2$ (in Gew.-%) ist deutlich stärker als die von $TiO_2$ oder $SnO_2$. Daher lassen sich Kombinationen der Keimbildner $ZrO_2$ und ($TiO_2$+$SnO_2$) mit gleicher keimbildenden Wirkung darstellen, die einer Beziehung folgen. Für die angestrebte geringe Trübung ergibt sich bei kurzen Keramisierungszeiten von kleiner 2,5 Stunden, bevorzugt kleiner 100 Minuten für den Mindestgehalt der Keimbildner:

$$ZrO_2+0{,}87\ (TiO_2+SnO_2) \geq 3{,}65$$

Weitere Grenzen ergeben sich aus der Forderung nach geringer Eigenfarbe:

$$\sum SnO_2+TiO_2 < 2{,}7\ \text{Gew.-\%}$$

$\Sigma SnO_2+TiO_2 < 2{,}7$ Gew.-%
und der Forderung nach Entglasungsfestigkeit:

$$ZrO_2 < 2{,}5\ \text{Gew.-\%}$$

$$SnO_2 < 0{,}4\ \text{Gew.-\%}$$

Auf der anderen Seite führen hohe Keimbildnergehalte zu einer Verschlechterung des Entglasungsverhaltens bei der Formgebung, wie es bereits ausgeführt wurde. Um sicherzustellen, dass die obere Entglasungstemperatur (OEG) unterhalb der Verarbeitungstemperatur $V_A$ liegt, ergibt sich eine obere Grenze für die Keimbildnergehalte, die der Beziehung folgt:

$$ZrO_2+0{,}87\ (TiO_2+SnO_2) \leq 4{,}3$$

Die erfindungsgemäßen Glaskeramikplatten können ähnlich wie bekannte Glaskeramiken durch eine zusätzliche Temperaturbehandlung bei Temperaturen zwischen ca. 900 und 1200°C in eine Keatit-Mischkristall enthaltende Glaskeramik umgewandelt werden. Glaskeramiken diesen Typs verfügen über eine höhere Temperaturbelastbarkeit, allerdings zu Lasten einer Erhöhung des thermischen Ausdehnungskoeffizienten, der zwischen Raumtemperatur und 700°C in der Größenordnung von ca. $1 \cdot 10^{-6}$/K liegt. Aufgrund des mit der Umwandlung einhergehenden Kristallwachstums haben sie ein transluzent bis opak weißes Aussehen. Die Trübung liegt in der Regel bei Haze-Werten von > 50%.
Die erfindungsgemäßen transparenten beschichteten Glaskeramikplatten eignen sich im besonderen Maße als Kochflächen für die Anwendung in einem Kochfeld. Die blickdichten farbigen, temperaturstabilen Beschichtungen befinden sich bevorzugt auf der gebrauchsabgewandten Seite der Glaskeramikplatte und ermöglichen so die farbliche Gestaltung und die Vermeidung der störenden Durchsicht auf die technischen Bauelemente unter der transparenten Glaskeramikplatte. Dabei können die Kochzonen der Glaskeramikplatte elektrisch strahlungsbeheizt, induktivbeheizt oder gasbeheizt sein. Insbesondere bei elektrischen Halogenheizkörpern ist es erforderlich durch die Beschichtung auch die Blendwirkung durch die strahlenden Heizkörper zu vermelden. Bei Strahlungsbeheizung ist es darüber hinaus wünschenswert, dass die Unterseitenbeschichtung infrarot durchlässig ist, um kurze Ankochzeiten zu gewährleisten. Es sind verschiedenste Arten und Ausführungsformen von Unterseitenbeschichtungen entsprechend dem Stand der Technik möglich. So kann z.B. die Unterseitenbeschichtung in den heißen Bereichen und kälteren Bereichen der Glaskeramikplatte unterschiedlich ausgebildet sein.
Die Oberseite der Glaskeramikplatte,die bei der Verwendung als Kochfläche auch die Gebrauchsseite darstellt, kann in üblicher Weise mit Dekorfarben dekoriert sein. Die Dekorausführungen können flächig oder spärlich ausgebildet sein und verschiedene Flächenbelegungsgrade besitzen. Die oberseitige Dekorierung kann auch so ausgebildet sein, dass sie zusammen mit der farbigen Unterseitenbeschichtung bestimmte Anmutungen oder Design erzeugt.
Für das Anbringen farbiger Displays oder Bildschirmdisplays ist es vorteilhaft, wenn die transparente Glaskeramikplatte eine Unterseitenbeschichtung mit partiellen Aussparungen enthält. Unter diesen Aussparungen können Anzeigen, Displays usw. angebracht werden, die durch die Aussparung durch die Glaskeramikplatte hindurch erkannt werden können. Infolge der erfindungsgemäßen geringen Eigenfarbe verfügen die Displayanzeigen und Bildschirme über eine hohe Farbtreue. Der leichte Grauton dererfindungsgemäßen Glaskeramikplatte macht sich bei den Anzeigen gegenüber der bräunlich gelben Eigenfarbe ohne $Nd_2O_3$-Gehalt sehr vorteilhaft bemerkbar. Die erfindungsgemäße Glaskeramikplatte ist bei der Anwendung als Kochfläche in besonderem Maße geeignet für farbige LED- oder LCD-Anzeigen und zukünftige farbige Anzeigen, Bildschirme und sogar Fernsehen. Neben der geringen Eigenfarbe ist auch die hohe Lichttransmission hier vorteilhaft. Auf diese Weise lassen sich neue Funktionen wie z.B. das Anzeigen von Kochrezepten oder interaktive Funktionen (Internet, Vernetzung mit anderen Hausgeräten) oder eine berührungsaktive Steuerelektronik mit Vorteil unter die transparente farbarme Glaskeramikplatte integrieren.

Die genannten Vorteile kommen auch bei anderen Anwendungen z.B. als Kaminsichtscheiben, Brandschutzverglasungen, Backofensichtscheiben oder bei Lampenabdeckungen in entsprechender Weise zum Tragen.

Die vorliegende Erfindung wird mit Hilfe der folgenden Beispiele weiter deutlich.

Die Gläser von Tabelle 1 wurden unter Verwendung von in der Glasindustrie üblichen Rohstoffen bei Temperaturen ca. 1620°C geschmolzen und geläutert. Das Gemenge wurde in Tiegeln aus gesinteren Kieselglas aufgeschmolzen und dann in Pt/Rh-Tiegeln mit Innentiegel aus Kieselglas umgegossen und bei Temperaturen von ca. 1550°C, 30 Minuten durch Rühren homogenisiert. Nach Abstehen bei 1640°C, 2 Stunden wurden Gussstücke von ca. 140x100x30mm Größe gegossen und in einem Kühlofen bei ca. 660°C entspannt und auf Raumtemperatur abgekühlt. Aus den Gussstücken wurden die Prüfmuster für die Messung der Eigenschaften im glasigen Zustand und die Platten für die Keramisierung präpariert. In Tabelle 1 sind bei den Zusammensetzungen auch die durch Rohstoffverunreinigungen bedingten $Fe_2O_3$-Gehalte aufgeführt. Der Wassergehalt der Gläser beträgt 0,03-0,05 mol/l, entsprechend $\beta_{OH}$-Werten von 0,32 bis 0,53 $mm^{-1}$.

Tabelle 1 zeigt die Zusammensetzungen der erfindungsgemäßen Ausgangsgläser Nr. 1 bis 8 und der Ausgangsgläser 9 bis 10 gemäß dem Stand der Technik zum Vergleich. Das Ausgangsglas 10 entspricht einer bezüglich Eigenfarbe optimierten Zusammensetzung ohne Nd-Zusatz. Diese Optimierung geht zu Lasten hoher Verarbeitungstemperatur $V_A$ und stark negativer thermischer Ausdehnung $\alpha$20/700 der Glaskeramik. Buntheit und Yellowness-Index liegen bei vergleichsweise höheren Werten.

In Tabelle 1 sind auch die Eigenschaften im glasigen Zustand, wie z.B. Transformationstemperatur Tg, Verarbeitungstemperatur $V_A$, obere Entglasungsgrenze OEG, thermische Ausdehnung zwischen Raumtemperatur und 300°C, sowie die Dichte aufgeführt aufgrund der Zusammensetzung, insbesondere der Keimbildnergehalte liegt die obere Entglasungsgrenze unterhalb der Verarbeitungstemperatur $V_A$.

Die Keramisierungen der Ausgangsgläser erfolgte mit den folgenden Temperatur/Zeit-Programmen:

Keramisierungsprogramm 1, (Gesamtzeit 147min):

    in 50 Minuten von Raumtemperatur auf 790°C
    30 Minuten Haltezeit bei 790°C
    in 30 Minuten von 790 auf 900°C
    7 Minuten Haltezeit bei 900°C
    in 30 Minuten von 900 auf 750°C
    schnelle Abkühlung auf Raumtemperatur

Keramisierungsprogramm 2, (Gesamtzeit 96min):

    in 38 Minuten von Raumtemperatur auf 790°C
    14 Minuten Haltezeit bei 790°C
    in 24 Minuten von 790 auf 900°C
    10 Minuten Haltezeit bei 910°C
    in 10 Minuten von 910 auf 800°C
    schnelle Abkühlung auf Raumtemperatur

Keramisierungsprogramm 3, (Herstellen von Keatit-Mischkristall-Glaskeramik):

    in 33 Minuten von Raumtemperatur auf 790°C
    30 Minuten Haltezeit bei 790°C
    in 32 Minuten von 790 auf Maximaltemperatur $T_{max}$
    7 Minuten Haltezeit bei $T_{max}$
    schnelle Abkühlung auf Raumtemperatur

Die Tabellen 2 uns 3 zeigen die Eigenschaften der transparenten Glaskeramiken mit Hochquarz-Mischkristallen als vorherrschende Kristallphase, die mit den Keramisierungsprogrammen 1 (Tabelle 2) bzw. 2 (Tabelle 3) hergestellt wurden. Die Beispiele 9 und 10 sowie 19 und 20 sind Vergleichsglaskeramiken außerhalb der Erfindung. Die Transmissionsmessungen wurden an polierten Platten von 4 mm Dicke mit Normlicht C, 2° durchgeführt. Neben den Farbkoordinaten L*, a*, b* im CIELAB-System sind auch die Farbkoordinaten x, y im CIE-System aufgeführt. Die erfindungsgemäßen Glaskeramlken belegen die vorteilhafte Wirkung des Einsatzes von Nd und optional zusätzlich Co zur Verringerung der störenden Eigenfarbe (Yellowness-Index, Buntheit C*). Es werden auch hohe Werte der Lichttransmission (Helligkeit) Y erreicht.

Die Trübung wurde bei Normlicht C an beidseitig polierten 3,6mm dicken Platten mit einem kommerziellen Messgerät haze-guard plus der Firma BYK-Gardner gemessen und durch den Haze-Wert charakterisiert. Transparente Glaskeramikplatten der Dicke 4mm mit polierten Oberflächen wurden mit einer Beschichtung aus einer hochtemperaturstabilen silbermetailic farbigen Lüsterfarbe gemäß dem Stand der Technik (DE 10014373 C2) versehen. Die Beschichtung wurde in einer zusätzlichen Temperaturbehandlung bei 800°C eingebrannt. Zunächst wurde die Farbe der Beschichtung mit einem Messgerät der Firma Datacolor, Bezeichnung Mercury 2000 in Remission (Auflicht) mit Normlicht C, 2° direkt gemessen. Im CIELAB-System betragen die Werte L*=78,5, a*=1,7, b*=9,6 und die Buntheit C*=9,7. Die Messungen wurden nun mit diesem Gerät so durchgeführt, dass die Farbe der Beschichtung durch die transparente Glaskeramikplatte hindurch bestimmt wurde. Das Licht durchstrahlt die transparente Glaskeramikplatte, wird an der farbigen Unterseitenbeschichtung teilweise absorbiert und reflektiert, bevor es dann wieder durch die Glaskeramikplatte läuft und zum Betrachter gelangt. Der störende Einfluss der Eigenfarbe der transparenten Glaskeramikplatte macht sich bei der Messung durch Veränderung der L*, a*, b*-Werte gegenüber den direkt an der Beschichtung gemessenen Werten bemerkbar. Die Messungen (Tabelle 2 und 3) belegen die vorteilhafte Wirkung der erfindungsgemäßen farbarmen transparenten Glaskeramikplatten.

Für das Keramisierungsprogramm 1 sind zusätzlich auch Eigenschaftswerte der Glaskeramiken wie Infrarottransmission bei 1600 nm, thermische Ausdehnung zwischen 20 und 700°C, Dichte und der mit Röntgenbeugung gemessene Phasengehalt der Hauptkristallphase, bestehend aus Hochquarz-Mischkristallen, sowie die mittlere Kristallitgröße aufgezeigt.

Für die Keramisierungsprogramme mit Gesamtzeiten von 147min und 96min werden durch die Wahl der Keimbildner geringe Trübungsgrade (Haze-Werte) erreicht.

Zusätzlich wurden einige Beispiele mit dem Keramisierungsprogramm 3 in transluzente Glaskeramiken mit Keatit-Mischkristallen als vorherrschende Kristallphase umgewandelt und Eigenschaften bestimmt (Tabelle 4). Die Maximaltemperaturen $T_{max}$ bei der Herstellung sind in der Tabelle angegeben. Lichttransmission Y und die IR-Transmission bei 1600nm wurden an 3,6mm dicken Platten gemessen. Die Farbwerte L*, a*, b* wurden in Remission (Auflicht) an 3,6mm dicken polierten Platten mit dem Messgerät Mercury 2000, Normlicht C, 2° bestimmt. Die Haze-Werte der Beispiele (polierte Platten 3,6mm Dicke) betragen mehr als 90%.

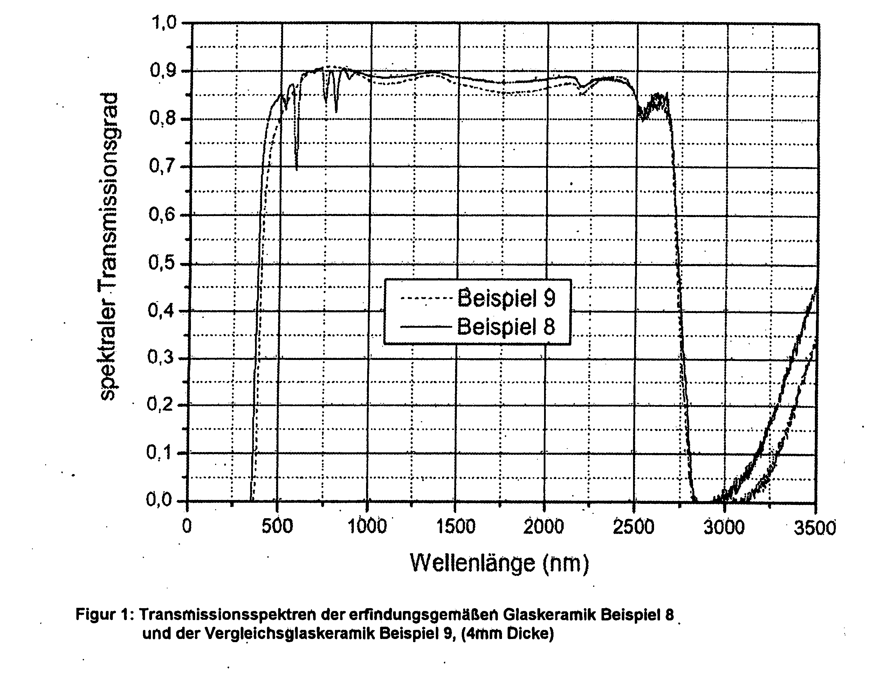

Figur 1 zeigt die Transmissionsspektren der erfindungsgemäßen Glaskeramik Beispiel 8 und der Vergleichsglaskeramik Beispiel 9, Das Vergleichsbeispiel zeigt die störende Färbung verbunden mit hohem Yellowness-Index und Chromatizität. Die erfindungsgemäße Glaskeramik zeigt die charakteristischen Absorptionsbanden des Nd-lons, die sich hervorragend auch zur Markierung der erfindungsgemäßen Glaskeramikplatten eignen. Darüber hinaus vereinfachen sie auch die Recyclingfähigkeiten der Glaskeramik durch optische Scherbentrennverfahren aufgrund der Absorptionsbanden und der Infrarotfluoreszenz des Nd-lons.

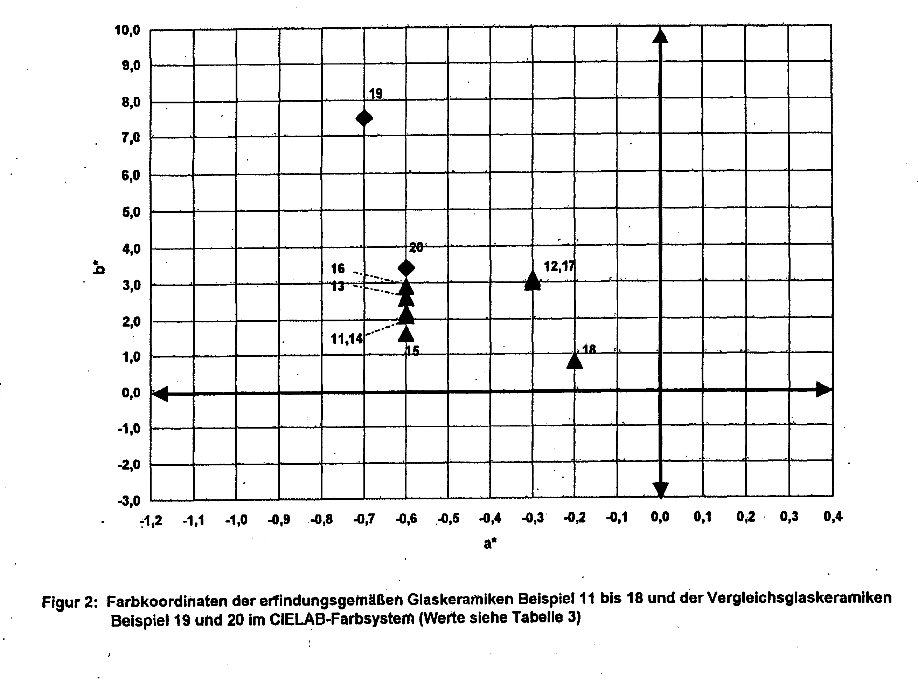

Figur 2 zeigt die Farbkoordinaten der erfindungsgemäßen Glaskeramiken, Beispiele 11 bis 18 und der Vergleichsglaskeramiken, Beispiele 19 und 20 im CIELAB-System

Tabelle 1: Zusammensetzungen und Eigenschaften erfindungsgemäßer Ausgangsgläser und Vergleichsgläser 9 und 10

| Glas Nr. | | 1 | 2 | 3 | 4 | 5 | 6 | 7 | 8 | 9 | 10 |
|---|---|---|---|---|---|---|---|---|---|---|---|
| Zusammensetzungen in Gew.-% auf Oxidbasis | | | | | | | | | | | |
| | | | | | | | | | | | |
| $Al_2O_3$ | | 21,3 | 21,3 | 21,8 | 21,65 | 20,0 | 19,95 | 20,1 | 20,0 | 19,9 | 22,0 |
| BaO | | - | - | 1,98 | 1,95 | 0,80 | 0.84 | 0,82 | 1.21 | 0,9 | 1,4 |
| $K_2O$ | | 0,13 | 0,11 | - | - | 0,20 | 0,20 | 0,20 | - | 0,22 | 0,27 |
| $Li_2O$ | | 3,75 | 3.70 | 3,69 | 3,64 | 3,54 | 3,75 | 3,65 | 3,63 | 3,6 | 4,15 |
| MgO | | 0,65 | 1,05 | 0,58 | 0,59 | 1,15 | 1,06 | 1,10 | 0,77 | 1,2 | - |
| $Na_2O$ | | 0,35 | 0,36 | 0,52 | 0,50 | 0,15 | 0,16 | 0,15 | 0,45 | 0,20 | 0,40 |
| $P_2O_5$ | | - | - | - | - | - | - | - | - | - | 1.33 |
| $SiO_2$ | | 67,55 | 67,35 | 65,3 | 65,2 | 68,1 | 67,35 | 67,4 | 67,22 | 67,2 | 65,5 |
| ZnO | | 1,57 | 2,0 | 1,70 | 1,57 | 1,48 | 1,60 | 1,54 | 1,57 | 1,55 | - |
| | | | | | | | | | | | |
| $SnO_2$ | | - | 0,11 | - | - | - | - | - | - | - | - |
| $TiO_2$ | | 2,23 | 2,19 | 2,29 | 2,38 | 2,26 | 2,35 | 2,35 | 2,33 | 2,59 | 2,13 |
| $ZrO_2$ | | 1,76 | 1,80 | 1,76 | 1,98 | 1,76 | 1,80 | 1,76 | 1,77 | 1,75 | 2,26 |
| | | | | | | | | | | | |
| $As_2O_3$ | | 0,40 | - | 0,28 | 0,43 | 0,40 | 0,86 | 0,85 | 0,86 | 0,86 | 0,44 |
| $Sb_2O_3$ | | - | - | - | - | - | - | - | - | - | 0.10 |
| | | | | | | | | | | | |
| $Nd_2O_3$ | | 0,09 | 0,02 | 0,08 | 0,09 | 0,14 | 0,06 | 0,06 | 0,17 | - | - |
| $Fe_2O_3$ | | 0,02 | 0,01 | 0,018 | 0,02 | 0,02 | 0,014 | 0,015 | 0,016 | 0,029 | 0,022 |
| CoO | | - | - | - | - | - | - | - | 0.0005 | - | - |
| NiO | - | - | - | - | - | - | 0,0023 | - | - | - | - |
| | | | | | | | | | | | |
| Tg | °C | 681 | 685 | 676 | 687 | 692 | 669 | 682 | 672 | 673 | 710 |
| $V_A$ | °C | 1320 | 1320 | 1306 | - | 1335 | 1315 | - | 1325 | 1304 | 1340 |
| OEG | °C | 1240 | 1270 | 1250 | - | 1255 | 1280 | - | 1265 | 1265 | 1315 |
| $\alpha_{20/300}$ | $10^{-6}$/K | 3,87 | 3,88 | 4,08 | 4,05 | 3,79 | 3,90 | 3,90 | 3,91 | 3,87 | 4,24 |
| Dichte | g/cm$^3$ | 2,436 | 2,446 | 2,472 | 2,479 | 2,444 | 2,451 | 2,450 | 2,447 | 2,454 | 2,431 |

Tabelle 2: Eigenschaften erfindungsgemäßer Glaskeramiken und Vergleichsglaskeramiken Beispiel 9 und 10, (Keramisierungsprogramm 1)

| | | 1 | 2 | 3 | 4 | 5 | 6 | 7 | 8 | 9 | 10 |
|---|---|---|---|---|---|---|---|---|---|---|---|
| **Beispiel Nr.** | | **1** | **2** | **3** | **4** | **5** | **6** | **7** | **8** | **9** | **10** |
| **Glass Nr.** | | **1** | **2** | **3** | **4** | **5** | **6** | **7** | **8** | **9** | **10** |
| **Transmission**<br>**Normlicht C, 2°** | 4mm<br>Dicke | | | | | | | | | | |
| **Lichttransmission Y** | % | 87,0 | 87,3 | 87,7 | 86,3 | 85,6 | 87,2 | 85,6 | 83,8 | 84,8 | 89,4 |
| **Yellowness Index** | | 3,3 | 5,4 | 3,5 | 4.0 | 2,8 | 5,8 | 6,3 | 2,1 | 15,0 | 5,9 |
| X | | 0,3126 | 0,3148 | 0,3128 | 0,3133 | 0,3121 | 0,3150 | 0,3156 | 0,3117 | 0,3239 | 0,3151 |
| Y | | 0,3197 | 0,3215 | 0,3199 | 0,3206 | 0,3195 | 0,3222 | 0,3223 | 0,3183 | 0,3319 | 0,3224 |
| L* | | 94,6 | 94,8 | 94,9 | 94,3 | 94,0 | 94,7 | 94,1 | 93,3 | 93,6 | 95,6 |
| a* | | -0,5 | -0,3 | -0,4 | -0,6 | -0,6 | -0,5, | -0,3 | -0,2 | -0,7 | -0,5 |
| b* | | 1,8 | 2,8 | 1,9 | 2,2 | 1,6 | 3,1 | 3,2 | 1,1 | 8,1 | 3,2 |
| C* | | 1,8 | 2,8 | 1,9 | 2,2 | 1,7 | 3,1 | 3,2 | 1,1 | 8,1 | 3,2 |
| **IR-Transmisson 1600nm** | 4mm<br>Dicke<br>% | 87,7 | 89,5 | 89,1 | 87,9 | 87,7 | 69,0 | 87,9 | 88,3 | 85,7 | 86,7 |
| **Farbe Unterkeiten- beschichtung durch**<br>**Glaskeramik gemessen (Remission)** | 4mm<br>Dicke<br>% | | | | | | | | | | |
| L* | | 76,71 | 76,65 | 75,88 | 76,29 | 75,68 | 76,59 | 75,85 | 74,63 | 74,90 | 77,48 |
| a* | | 1,21 | 1,84 | 1,49 | 1,26 | 1,19 | 1,32 | 1,99 | 1,71 | 1,68 | 1,23 |
| b* | | 10,49 | 11,99 | 11,40 | 11,06 | 10,25 | 12,42 | 12,29 | 9,50 | 18,69 | 12,83 |
| c* | | 10,56 | 12,12 | 11,49 | 11,13 | 10,32 | 12,49 | 12,45 | 9,66 | 18,76 | 12,89 |
| $\alpha_{20/700}$ | $10^{-6}$/K | -0,26 | -0,05 | -0,10 | +0,03 | +0,11 | -0,07 | +0,10 | -0,05 | +0,14 | -0,46 |
| **Dichte** | g/cm$^3$ | 2,519 | 2,526 | 2,545 | 2,550 | 2,534 | 2,543 | 2,538 | 2,544 | 2,548 | 2,509 |
| **Röntgenbeugung:**<br>**Hochquarz-Phasengehalt** | % | 73 | 72 | 71 | 66 | 71 | 76 | 72 | 71 | 75 | 75 |
| **Kristallitgröße** | nm | 33 | 32 | 40 | 37 | 28 | 40 | 30 | 33 | 41 | 38 |
| **Trübung**<br>**Haze** | 3,6mm<br>Dicke % | 0,28 | 0,28 | 0,50 | 0,42 | 0,27 | 0,23 | 0,25 | 0,32 | 0,20 | 0,27 |

Tabelle 3: Eigenschaften erfindungsgemäßer Glaskeramiken und Vergleichsglaskeramiken Beispiel 19 und 20, (Keramisierungsprogramm 2)

| Beispiel Nr. | | 11 | 12 | 13 | 14 | 15 | 16 | 17 | 18 | 19 | 20 |
|---|---|---|---|---|---|---|---|---|---|---|---|
| Glas Nr. | | 1 | 2 | 3 | 4 | 5 | 6 | 7 | 8 | 9 | 10 |
| **Transmission**<br>**Normlicht C, 2°**<br>**Lichttransmission Y**<br>**Yellowness Index**<br>X<br>Y<br>L*<br>a*<br>b*<br>c* | 4mm<br>Dicke<br>% | 86,5<br>4,1<br>0,3133<br>0,3207<br>94,4<br>-0,6<br>2,2<br>2,3 | 86,6<br>5,8<br>0,3152<br>0,3220<br>94,5<br>-0,3<br>3,0<br>3,0 | 86,8<br>4,9<br>0,3141<br>0,3214<br>94,5<br>-0,6<br>2,6<br>2,7 | 86,1<br>3,9<br>0,3131<br>0,3204<br>94,2<br>-0,6<br>2,1<br>2,2 | 85,6<br>2,8<br>0,3121<br>0,3195<br>94,0<br>-0,6<br>1,6<br>1,7 | 87,6<br>5,4<br>0,3146<br>0,3220<br>94,8<br>-0,6<br>2,9<br>3,0 | 85,1<br>6,1<br>0,3154<br>0,3222<br>93,9<br>-0,3<br>3,1<br>3,1 | 84,0<br>1,6<br>0,3112<br>0,3178<br>93,4<br>-0,2<br>0,8<br>0,8 | 85,4<br>13,8<br>0,3228<br>0,3307<br>93,9<br>-0,7<br>7,5<br>7,5 | 89,4<br>6,2<br>0,3153<br>0,3227<br>95,6<br>-0,6<br>3,4<br>3,4 |
| **Farbe Unterseitenbeschichtung durch**<br>**Glaskeramik gemessen (Remission)**<br>L*<br>a*<br>b*<br>c* | 4mm<br>Dicke % | 76,37<br>1,33<br>11,34<br>11,40 | 76,58<br>1,73<br>12,34<br>12,46 | 75,93<br>1,35<br>11,75<br>11,83 | 76,63<br>1,12<br>10,85<br>10,91 | 75,94<br>1,13<br>10,14<br>10,20 | 76,08<br>1,30<br>12,31<br>12,37 | 75,53<br>1,69<br>12,37<br>12,51 | 74,98<br>1,73<br>9,07<br>9,24 | 74,92<br>1,80<br>18,67<br>18,76 | 77,61<br>1,24<br>12,99<br>13,05 |
| **Trübung**<br>**Haze** | 3,6mm<br>Dicke<br>% | 0,31 | 0,34 | 0,65 | 0,52 | 0,27 | 0,28 | 0,39 | 0,29 | 0,27 | 0,41 |

Tabelle 4: Eigenschaften nach Umwandlung in Keatit-Glaskeramik, (Keramisierungsprogramm 3)

| Beispiel Nr. | | 21 | 22 | 23 | 24 | 25 |
|---|---|---|---|---|---|---|
| Glas Nr. | | 2 | 4 | 6 | 8 | 9 |
| Maximaltemperatur $T_{max}$ | °C | 1120 | 1100 | 1090 | 1090 | 1080 |
| Transmission Normlicht C, 2° | 3,6mm Dicke | | | | | |
| Lichttransmission Y | % | 9,0 | 6,4 | 4,5 | 5,0 | 3,9 |
| IR-Transmission 1600nm | % | 79,9 | 68,3 | 49,8 | 58,6 | 56,1 |
| Farbe (Remission) | 3,6mm Dicke | | | | | |
| L* | % | 84,51 | 87,79 | 90,91 | 87,22 | 87,32 |
| a* | | -3,29 | -2,73 | -1,71 | -1,52 | -1,02 |
| b* | | -6,23 | -6,30 | -2,98 | -7,56 | -2,36 |
| C* | | 7,04 | 6,87 | 3,44 | 7,71 | 2,57 |
| $\alpha_{20/700}$ | $10^{-6}$/K | +0,91 | +1,26 | +1,00 | +1,02 | +1,05 |
| Dichte | g/cm³ | 2.515 | 2,544 | 2,513 | 2,522 | 2,516 |
| Röntgenbeugung: | | | | | | |
| Keatit-Phasengehalt | % | 88 | 83 | 86 | 85 | 89 |
| Keatit-Kristallitgröße | nm | n.b. | >120 | 99 | >120 | - |

**Patentansprüche**

1. Transparente farblose Lithiumaluminosilikat-Glaskeramikplatte mit Hochquarz-Mischkristallen als vorherrschender Kristallphase, die auf einer Seite mit einer ganzflächigen oder weitgehend ganzflächigen blickdichten, farbigen, temperaturstabilen Beschichtung versehen ist,
**gekennzeichnet durch** einen Yellowness-Index von kleiner 10% bei 4mm Dicke und einer Buntheit der Glaskeramik im CIELAB-Farbsystem von C* kleiner 5 und einen Gehalt (in Gew.-% auf Oxidbasis)

| | |
|---|---|
| $Li_2O$ | 3,0-4,5 |
| $Na_2O$ | 0-1,5 |
| $K_2O$ | 0-1,5 |
| $\Sigma Na_2O+K_2O$ | 0,2-2,0 |
| $MgO$ | 0-2,0 |
| $CaO$ | 0-1,5 |
| $SrO$ | 0-1,5 |
| $BaO$ | 0-2,5 |
| $ZnO$ | 0-2,5 |
| $B_2O_3$ | 0-1,0 |
| $Al_2O_3$ | 19-25 |
| $SiO_2$ | 55-69 |
| $TiO_2$ | 1-3 |
| $ZrO_2$ | 1-2,5 |
| $SnO_2$ | 0-0,4 |
| $\Sigma SnO_2+TiO_2$ | < 3 |
| $P_2O_5$ | 0-3,0 |
| $Nd_2O_3$ | 0,01 - 0,4 |
| $CoO$ | 0,0 - 0,004 |

gegebenenfalls mit Zusätzen chemischer Läutermittel wie $As_2O_3$, $Sb_2O_3$, $CeO_2$ und Läuterzusätzen wie Sulfat-, Chlorid-, Fluoridverbindungen in Gesamtgehalten bis zu 2,0 Gew.-%.

2. Glaskeramikplatte nach Anspruch 1,
**gekennzeichnet durch** einen Gehalt (in Gew.-% auf Oxidbasis) von:

| | |
|---|---|
| $Li_2O$ | 3,2-4,3 |
| $Na_2O$ | 0,2-1,0 |
| $K_2O$ | 0-0,8 |
| $\Sigma Na_2O+K_2O$ | 0,3-1,5 |
| MgO | 0,1-1,5 |
| CaO | 0-1,0 |
| SrO | 0-1,0 |
| BaO | 0-2,5 |
| ZnO | 0-2,0 |
| $Al_2O_3$ | 19-24 |
| $SiO_2$ | 60-68 |
| $TiO_2$ | 1,0-2,7 |
| $ZrO_2$ | 1,2-2,2 |
| $SnO_2$ | 0-0,3 |
| $\Sigma SnO_2+TiO_2$ | < 2,7 |
| $P_2O_5$ | 0-3,0 |
| $Nd_2O_3$ | 0,02-0,3 |
| CoO | 0,0-0,003 |

gegebenenfalls mit Zusätzen chemischer Läutermittel wie $As_2O_3$, $Sb_2O_3$, $CeO_2$ und Läuterzusätzen wie Sulfat-, Chlorid-, Fluoridverbindungen in Gesamtgehalten bis zu 1,5 Gew.-%.

3. Glaskeramikplatte nach Anspruch 1 oder 2,
**dadurch gekennzeichnet,**
**dass** der Gehalt an $ZrO_2+0,87\ (TiO_2+SnO_2)$ 3,65 bis 4,3 Gew.-% beträgt.

4. Glaskeramikplatte nach einem der Ansprüche 1 bis 3, **gekennzeichnet durch** einen Gehalt von weniger als 2,5 Gew.-% $TiO_2$, weniger als 0,2 Gew.-% $Nd_2O_3$, weniger als 0,04 Gew.-%, bevorzugt weniger als 0,021 Gew.-% $Fe_2O_3$, eine Lichtdurchlässigkeit von mehr als 80%, insbesondere mehr als 85% und einen Yellowness-Index von kleiner 7, jeweils bei 4mm Schichtdicke sowie einer Buntheit von C* von weniger als 3,5 im CIE LAB-Farbsystem.

**Claims**

1. Transparent colourless lithium aluminosilicate glass-ceramic plate comprising beta-quartz solid solutions as the predominant crystal phase, which is provided on one side with a coloured, viewing-resistant, thermally stable coating over the entire surface or substantially the entire surface,
**characterized by** a yellowness index of less than 10% at a thickness of 4 mm and a glass-ceramic chroma in the CIELAB colour system of C* less than 5 and a content (in % by weight, based on oxide) of:

| | |
|---|---|
| $Li_2O$ | 3.0-4.5, |
| $Na_2O$ | 0-1.5, |
| $K_2O$ | 0-1.5, |
| $\Sigma Na_2O+K_2O$ | 0.2-2.0, |
| MgO | 0-2.0, |
| CaO | 0-1.5, |
| SrO | 0-1.5, |
| BaO | 0-2.5, |

(continued)

| | |
|---|---|
| ZnO | 0-2.5, |
| $B_2O_3$ | 0-1.0, |
| $Al_2O_3$ | 19-25, |
| $SiO_2$ | 55-69, |
| $TiO_2$ | 1-3, |
| $ZrO_2$ | 1-2.5, |
| $SnO_2$ | 0-0.4, |
| $\Sigma SnO_2+TiO_2$ | < 3, |
| $P_2O_5$ | 0-3.0, |
| $Nd_2O_3$ | 0.01-0.4, |
| CoO | 0.0-0.004, |

if appropriate with additions of chemical refining agents such as $As_2O_3$, $Sb_2O_3$ and $CeO_2$ and refining additives such as sulphate, chloride and fluoride compounds in total contents of up to 2.0% by weight.

2. Glass-ceramic plate according to Claim 1,
   **characterized by** a content (in % by weight, based on oxide) of:

| | |
|---|---|
| $Li_2O$ | 3.2-4.3, |
| $Na_2O$ | 0.2-1.0, |
| $K_2O$ | 0-0.8, |
| $\Sigma Na_2O+K_2O$ | 0.3-1.5, |
| MgO | 0.1-1.5, |
| CaO | 0-1.0, |
| SrO | 0-1.0, |
| BaO | 0-2.5, |
| ZnO | 0-2.0, |
| $Al_2O_3$ | 19-24, |
| $SiO_2$ | 60-68, |
| $TiO_2$ | 1.0-2.7, |
| $ZrO_2$ | 1.2-2.2, |
| $SnO_2$ | 0-0.3, |
| $\Sigma SnO_2+TiO_2$ | < 2.7, |
| $P_2O_5$ | 0-3.0, |
| $Nd_2O_3$ | 0.02-0.3, |
| CoO | 0.0-0.003, |

if appropriate with additions of chemical refining agents such as $As_2O_3$, $Sb_2O_3$ and $CeO_2$ and refining additives such as sulphate, chloride and fluoride compounds in total contents of up to 1.5% by weight.

3. Glass-ceramic plate according to Claim 1 or 2,
   **characterized**
   **in that** the content of $ZrO_2+0.87$ $(TiO_2+SnO_2)$ is from 3.65 to 4.3% by weight.

4. Glass-ceramic plate according to one of Claims 1 to 3,
   **characterized by** a content of less than 2.5% by weight $TiO_2$, less than 0.2% by weight $Nd_2O_3$, less than 0.04% by weight, preferably less than 0.021% by weight, $Fe_2O_3$, a light transmission of more than 80%, in particular more than 85%, and a yellowness index of less than 7, in each case at a layer thickness of 4 mm and a C* chroma of less than 3.5 in the CIELAB colour system.

**Revendications**

1. Plaque vitrocéramique à base d'aluminosilicate de lithium transparente et incolore avec des cristaux mixtes de quartz haut comme phase de cristal prédominante, qui est dotée sur un côté d'un revêtement sur toute la surface ou d'un revêtement sensiblement sur toute la surface, opaque, coloré, stable en température, **caractérisée par** un indice de jaunissement inférieur à 10 % pour une épaisseur de 4 mm et une bigarrure du vitrocérame dans le système de couleur CIELAB de C* inférieure à 5 et une teneur (en % en poids sur la base d'oxyde)

| | |
|---|---|
| $LI_2O$ | 3,0-4,5 |
| $Na_2O$ | 0-1,5 |
| $K_2O$ | 0-1,5 |
| $\Sigma Na_2O+K_2O$ | 0,2-2,0 |
| $MgO$ | 0-2,0 |
| $CaO$ | 0-1,5 |
| $SrO$ | 0-1,5 |
| $BaO$ | 0-2,5 |
| $ZnO$ | 0-2,5 |
| $B_2O_3$ | 0-1,0 |
| $Al_2O_3$ | 19-25 |
| $SiO_2$ | 55-69 |
| $TiO_2$ | 1-3 |
| $ZrO_2$ | 1-2,5 |
| $SnO_2$ | 0-0,4 |
| $\Sigma SnO_2+TiO_2$ | <3 |
| $P_2O_5$ | 0-3,0 |
| $Nd_2O_3$ | 0,01-0,4 |
| $CoO$ | 0,0-0,004 |

éventuellement avec des additifs d'agents d'affinage chimiques tels que le $As_2O_3$, $Sb_2O_3$, $CeO_2$ et des additifs d'affinage tels que des composés de sulfate, de chlorure et de fluorure dans des teneurs globales allant jusqu'à 2,0 % en poids.

2. Plaque vitrocéramique selon la revendication 1,
**caractérisée par** une teneur (en % en poids sur la base d'oxyde)
de :

| | |
|---|---|
| $LI_2O$ | 3,2-4,3 |
| $Na_2O$ | 0,2-1,0 |
| $K_2O$ | 0-0, 8 |
| $ENa_2O+K_2O$ | 0,3-1,5 |
| $MgO$ | 0,1-1,5 |
| $CaO$ | 0-1,0 |
| $SrO$ | 0-1,0 |
| $BaO$ | 0-2,5 |
| $ZnO$ | 0-2,0 |
| $Al_2O_3$ | 19-24 |
| $SiO_2$ | 60-68 |
| $TiO_2$ | 1,0-2,7 |
| $ZrO_2$ | 1,2-2,2 |
| $SnO_2$ | 0-0,3 |
| $\Sigma SnO_2+TiO_2$ | <2,7 |
| $P_2O_5$ | 0-3,0 |
| $Nd_2O_3$ | 0,02-0,3 |

(suite)

| | |
|---|---|
| CoO | 0,0-0,003 |

éventuellement avec des additifs d'agents d'affinage chimiques tels que le $As_2O_3$, $Sb_2O_3$, $CeO_2$ et des additifs d'affinage tels que des composés de sulfate, de chlorure et de fluorure dans des teneurs globales allant jusqu'à 1,5 % en poids.

3. Plaque vitrocéramique selon la revendication 1 ou 2,
**caractérisée en ce que** la teneur en $ZrO_2+0,87$ $(TiO_2+SnO_2)$ représente 3,65 à 4,3 % en poids.

4. Plaque vitrocéramique selon l'une quelconque des revendications 1 à 3,
**caractérisée par** une teneur inférieure à 2,5 % en poids de $TiO_2$, inférieure à 0,2 % en poids de $Nd_2O_3$, inférieure à 0,04 % en poids, de préférence à 0,021 % en poids de $Fe_2O_3$, une perméabilité à la lumière supérieure à 80 %, en particulier supérieure à 85 % et un indice de jaunissement inférieur à 7, respectivement pour une épaisseur de couche de 4 mm et une bigarrure de C* inférieure à 3,5 dans le système de couleur CIELAB.

Figur 1: Transmissionsspektren der erfindungsgemäßen Glaskeramik Beispiel 8
und der Vergleichsglaskeramik Beispiel 9, (4mm Dicke)

EP 1 837 314 B1

Figur 2: Farbkoordinaten der erfindungsgemäßen Glaskeramiken Beispiel 11 bis 18 und der Vergleichsglaskeramiken Beispiel 19 und 20 im CIELAB-Farbsystem (Werte siehe Tabelle 3)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 220333 A
- EP 1170264 A
- US 6914223 B2
- US 20050129959 A1
- US 6660989 B2
- DE 10017701 A1
- US 6660980 B2
- US 4438210 A
- JP 3023237 A
- US 4093468 A
- DE 10014373 C2